Europäisches Patentamt

European Patent Office

Office européen des brevets

(11) Publication number: **0 432 906 A1**

# EUROPEAN PATENT APPLICATION

(21) Application number: **90312410.5**

(22) Date of filing: **14.11.90**

(51) Int. Cl.⁵: **C02F 1/28, C02F 1/50, C02F 1/76, C02F 9/00**

(30) Priority: **07.12.89 GB 8927652**

(43) Date of publication of application:
**19.06.91 Bulletin 91/25**

(84) Designated Contracting States:
**AT BE CH DE DK ES FR GB GR IT LI LU NL SE**

(71) Applicant: **FAIREY INDUSTRIAL CERAMICS LIMITED**

**Stone, Staffordshire, ST15 OPU(GB)**

(72) Inventor: **Hobbs, Derek John**
**108 Balland Field**
**Willingham, Cambridge CB4 5DU(GB)**

(74) Representative: **Maggs, Michael Norman et al**
**Kilburn & Strode 30 John Street**
**GB-London WC1N 2DD(GB)**

(54) **Filter.**

(57) A water filter comprises a hollow cylindrical ceramic candle element (10) having a lower closed end and an upper open end. The upper end is glued between inner (18) and outer (20) downwardly-depending circular flanges of a plastics material end cap (12). An impervious plastics tube (24) is concentrically glued to the inner surface of the inner flange (18). Water-treating granules (28) are retained within the tube (24) by stainless steel gauzes (30,32), these granules may contain coral sand to reduce the acidity of and add minerals to the water, ion exchange resins to remove heavy metals, polyphosphates for softening the water, substances for removing or killing viruses and bacteria, or for adding other desirable chemicals such as disinfectants. Water flows through the candle element (10), down through an annular space (26) between the element and the tube (24), up through the granules in the tube and out through a bore (34) in the end cap (12).

FIG. 2

## FILTER

The present invention relates to a filter, and particularly to a water filter of the candle type.

Candle-type water filters are known per se. They generally comprise a hollow cylindrical ceramic candle or thimble, closed at one end and open at the other. The open end is mounted to a suitable housing. Water to be filtered flows from the outer surface of the candle, through the ceramic of the candle, and into the central hollow. It then flows out through the open end of the candle, into the housing for collection or further processing.

Some known types of ceramic candle have incorporated into them on firing metallic silver and carbon. The combination acts as a bacterial filter, and also is capable of reducing the level of dangerous organic chemicals such as insecticides, pesticides and organochlorine from water, along with at least some of the corresponding undesirable tastes and odours. In particular, chlorine, which is used as bactericide by many water authorities, can be substantially eliminated. The function of the silver is essentially to prevent bacteria from growing on the surface of the candle.

Today's consumers are, however, becoming more demanding and there exists a need to remove heavy metals such as lead, copper, nickel, cadmium, barium and zinc from drinking water. It would also be desirable to be able to remove the temporary hardness in many commercial water supplies, which gives problems of scale or furring of the electrical elements in water heaters, central heating systems and vending machines. Finally, consumers are becoming more health conscious and perceive benefits in the presence of certain trace minerals in water, in particular mineral waters. It would be desirable to be able to add these minerals simply and easily to tap water, and at the same time to deal with the increasing fear that "acid rain" is causing tap water to become more and more acidic.

It is an object of the present invention to be able to provide these features in a single, easily usable, filter candle.

It is a further object to provide a filter candle in which the filtering characteristics can be changed easily by the manufacturer without the necessity for changing the ceramic candle portion or filter element itself. The features that might be provided by the manufacturer could include any of those mentioned above, or others.

It is a further object of the invention to provide a filter candle capable of providing additional filtering, or additional water treatments, over and above those provided by conventional filter candles, in particular such candles intended for domestic use.

According to a first aspect of the invention there is provided a filter candle comprising an elongate hollow filter media element contained within which is a particulate filter or liquid-treatment means.

According to a second aspect of the invention there is provided a filter candle comprising an elongate hollow filter media element contained within which is an elongate tube holding a filter or liquid treatment means. The filter or liquid treatment means is preferably particulate.

The liquid flow path through the filter is through the filter media element and then through the particulate material within the tube. To this end, the tube is preferably of a plastics or other material which is impervious to the liquid to be filtered, and is open at each end so that the fluid flow path is along the tube. The filter or liquid treatment means, preferably in particulate form, is retained within the tube by means or end plugs which retain the substance inside the tube but allow the fluid to pass. Porous, apertured, or fibrous plugs could be used, but in the most convenient embodiment the plugs are of gauze.

The filter media element is desirably generally cylindrical, with one end being open and one closed. Sealed across the open end may be an end cap having a bore or aperture therein through which the fluid which has been filtered can pass out of the candle. The end cap can comprise a mounting means for mounting the candle to a housing, and to that end it may include a screw threaded portion. The bore or aperture may extend along the length of the screw threaded portion.

The end cap and/or mounting means may serve in addition as means for locating and/or retaining the elongate tube within the hollow filter media element. It may, for example, incorporate tube mounting means for holding a generally cylindrical tube concentric with a generally cylindrical filter media element. One open end of the tube communicates with the interior of the filter media element, while the other communicates with the bore or aperture in the end piece. In this way, fluid to be filtered passes through the filter media member, along an annular space between the filter media member and the tube, into one open end of the tube, through the filter or liquid-treatment means within the tube, out of the other end of the tube, and out of the filter candle via the bore in the end cap.

The means for mounting the tube may comprise a generally circular mounting flange within which or around which the tube may be secured, either by a simple press fit or alternatively by any other suitable means such as an adhesive. Alternatively, one could even envisage the end cap and the tube being integral with each other.

The end cap preferably includes an outer generally circular mounting flange which fits closely over the open end of the filter media element. Any convenient means of attaching the filter media member to the flange, for example an adhesive, may be used.

Thus, in one embodiment the end cap includes inner and outer concentric downwardly-dependent mounting flanges, the outer flange which serves to retain the filter media element and the inner of which serves to retain the tube containing the filter or liquid-treatment means.

The filter media element is conveniently of a ceramics material, but this may include metallic silver and carbon and perhaps other substances depending upon the filtration that is to be carried out. The filter or liquid treatment means may, but need not, be particulate in form, and may consist for example either of natural particles such as grains of sand or the like, of crushed crystals, or alternatively of man made particles such as microspheres. Suitable filter or liquid-treatment means include bactericides, virocides, substances to reduce temporary water hardness (for example sodium polyphosphates), substances to remove heavy metals (for example ion exchange resins, with or without iodine), substances to reduce water acidity and/or add minerals (for example "coral sand"), or substances for effecting a slow release of desirable chemicals, such as disinfectants, into the water.

The invention is primarily concerned with the filtration of water, but it may be applicable to filtrations of other liquids as well. It would also be possible to conceive of a filter in which the liquid to be filtered passes first through the filter or liquid treatment means and only then through the surrounding hollow filter media element. This, however, is considered undesirable for most purposes.

The invention may be carried into practice in a number of ways and one specific embodiment will now be described, by way of example, with reference to the drawings, in which:

Figure 1 is a side elevation of a filter candle embodying the present invention;

Figure 2 is a longitudinal section along the line A-A of Figure 1; and

Figure 3 shows details of the filter mount.

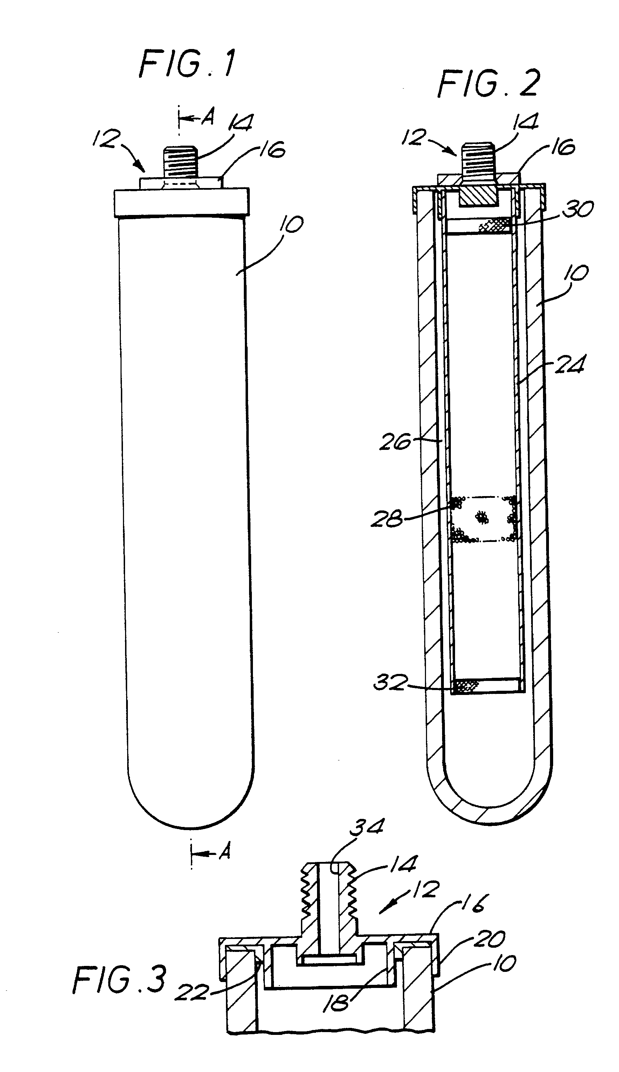

Referring first to Figures 1 and 2, it will be seen that the filter candle of the present embodiment includes an outer ceramic candle or thimble element 10, this element being generally of hollow cylindrical shape having a closed lower end and an open upper end. The material of the element 10 is ceramic within which is fired metallic silver and carbon.

Glued to the end of the element 10 is a plastics material end cap and mounting 12 which incorporates a threaded mounting portion 14 by which the candle may be secured to a candle housing (not shown). A washer 16, received over the mounting portion 14, allows the candle easily to be unscrewed when necessary.

Turning now to the detailed diagram of Figure 3, it will be seen that the end cap and mounting 12 includes a flat circular end cap portion 16 depending downwardly from which there are inner and outer circular mounting flanges, respectively 18, 20. The end cap and mounting 12 is received over the end of the element 10 so that the end fits within the downwardly-opening annular channel that is formed between the mounting flanges 18, 20. The radius of the outer mounting flange 20 is such that it fits snugly over the end of the element 10; and for additional security the element is secured by means of a suitable adhesive 22 (for example an epoxy resin such as Araldite-trade mark).

To the inner surface of the inner mounting flange 18, as is best seen in Figure 2, there is secured an elongate cylindrical plastics tube. This, again, may be secured by means of an appropriate adhesive (not shown).

The plastics tube extends within the hollow interior of the element 10, and is concentric therewith so as to provide an elongate annular space 26 between the tube 24 and the element 10.

Within the tube 24 are retained water treating or filtering chemicals or substances, preferably in the form of granules 28. The granules are retained within the tube by means of upper and lower stainless steel gauzes 30, 32.

In use, water to be filtered passes from the outside of the element 10, through the element, downwardly within the annular space 26, up through the granules within the tube 24, and out of the candle via a bore 34 in the mounting portion 14. It then passes on within the housing (not shown) either to a receptacle for storage or straight on for future use.

The substance or substances within the tube 24, represented in this embodiment by the granules 28, will depend upon the treatment or filtering to which the water is to be subjected. Possibilities include, amongst other things, substances to counteract the temporary hardness of some waters, to remove heavy metals or other contaminants, to remove or kill viruses or bacteria, and to remineralise the water or otherwise to add required substances to it. Other filters and water treatments could easily be developed as and when the need arises merely by making use of appropriate substances within the tube.

Examples of suitable substances include sodium polyphosphates, in crystalline form, to counteract temporary hardness; ion exchange resins, desirably in the form of plastic beads, to remove dissolved ionic components such as metals, hardness salts, nitrates etc; mineral sand to decrease acidity and to remineralise the water; activated carbon or bone charcoal to improve taste, odour and remove organic contaminants; manganous sands to remove iron, hydrogen sulphide etc or other such media to improve water quality. Conventional bactericides and virocides, for example incorporating iodine, can easily be included. Any of these substances could be used on their own, or alternatively mixed with others if it is desired to effect several treatments at once, for example both to soften the water and to remineralise it.

One advantage of the specific embodiment is that all the filtered water which emerges from the bore 34 in the mounting portion 14 has been filtered to the same extent. All the water has passed firstly through the wall thickness of the element 10 (which is substantially constant throughout), and then has passed the entire length of the tube 24.

## Claims

1. A filter candle comprising an elongate hollow filter media element within which there is a particulate filter or liquid-treatment means.

2. A filter candle comprising an elongate hollow filter media element contained within which there is an elongate tube holding a filter or liquid-treatment means.

3. A filter as claimed in Claim 2 in which the elongate tube is of material impervious to the liquid to be filtered and is open at each end so that the fluid flow path is along the tube.

4. A filter as claimed in Claim 2 or Claim 3 in which the filter or liquid-treatment means is particulate.

5. A filter as claimed in any one of Claims 2 to 4 in which the filter media element is generally cylindrical with one end open and one end closed, the open end being sealed by an end cap having a bore therein through which the fluid passes.

6. A filter as claimed in Claim 5 in which the end cap includes means for locating the elongate tube within the filter media element.

7. A filter as claimed in Claim 5 or Claim 6 in which one end of the tube communicates with the interior of the filter media element and the other with the bore in the end cap.

8. A filter as claimed in Claim 5 or Claim 6 or Claim 7 in which there is an annular gap between the filter media element and the elongate tube.

9. A filter as claimed in any one of the preceding claims in which the filter media element is ceramic.

10. A filter as claimed in any one of the preceding claims in which the liquid-treatment means includes a bactericide.

11. A filter as claimed in any one of the preceding claims in which the liquid-treatment means includes a virocide.

12. A "filter as claimed in any one of the preceding claims in which the liquid-treatment means includes a substance for reducing temporary water hardness.

13. A filter as claimed in Claim 12 in which the substance for reducing temporary water hardness contains polyphosphates.

14. A filter as claimed in any one of the preceding claims in which the liquid-treatment means includes a substance for removing heavy metals.

15. A filter as claimed in Claim 14 in which the substance for removing heavy metals includes an ion exchange resin.

16. A filter as claimed in any one of the preceding claims in which the liquid-treatment means includes iodine.

17. A filter as claimed in Claim 16 when dependent upon Claim 15 in which the iodine is included in the ion exchange resin.

18. A filter as claimed in any one of the preceding claims in which the liquid-treatment means includes a substance for adding minerals to the liquid.

19. A filter as claimed in Claim 18 in which the substance for adding minerals to the liquid is coral sand.

20. A filter as claimed in any one of the preceding claims in which the liquid-treatment means includes a substance for reducing the acidity of the liquid.

21. A filter as claimed in any one of the preceding claims in which the liquid-treatment means comprises microspheres.

22. A filter as claimed in any one of the preceding claims in which the liquid-treatment means includes a substance for effecting a slow release of chemicals into the liquid.

23. A filter as claimed in Claim 22 in which the liquid treatment means releases disinfectants into the liquid.

24. A filter candle as claimed in Claim 5 in which the end cap includes means for mounting the candle to a housing.

25. A filter candle as claimed in Claim 24 in which the mounting means comprises a screw-threaded portion.

26. A filter candle as claimed in Claim 6 in which the means for locating comprises a generally circular mounting flange within which or around which the tube is secured.

27. A filter candle as claimed in any one of Claims 1 to 5 in which the tube is integral with the end cap.

EP 0 432 906 A1

FIG.1

FIG.2

FIG.3

European
Patent Office

**EUROPEAN SEARCH
REPORT**

Application Number

**EP 90 31 2410**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-7 810 99   (TINSLEY LTD.)<br>* page 1, line 72 - page 2, line 7; figure 2 *<br>– – – | 1,2,4,15,<br>24,25,27 | C 02 F 1/28<br>C 02 F 1/50<br>C 02 F 1/76 |
| X | GB-A-1 072 227   (AMERICAN MACHINE & FOUNDRY CO.)<br>* page 3, lines 18 - 75; figure 6 *<br>– – – | 1,2,5-8,<br>12,16,27 | C 02 F 9/00 |
| X | CH-A-3 398 88   (DEUTSCHE KATADYN GESELLSCHAFT)<br>* the whole document *<br>– – – | 1,10,18 | |
| X | DE-A-1 517 582   (SANZENBACHER)<br>* page 1, lines 1 - 10 * * page 3, line 16 - page 5, line 8 @<br>page 7, lines 21 - 22 *<br>– – – | 1,12,16,<br>17 | |
| X,P,A | EP-A-0 388 158   (AMETEK INC.)<br>* claim 1 *<br>– – – | 1,14,15 | |
| A,P | EP-A-0 364 111   (KABUSHIKI KAISHA AIAISHI)<br>* column 3, lines 44 - 56 * * column 5, line 46 - column 6, line<br>16 *<br>– – – | 1-3,10,<br>11,25 | |
| A | EP-A-0 150 559   (CONCOR INTERNATIONAL LTD.)<br>* page 5, lines 4 - 19; figure 1 *<br>– – – | 1,9,10,24,<br>27 | **TECHNICAL FIELDS SEARCHED (Int. Cl.5)** |
| A | US-A-3 289 847   (P.W.ROTHEMUND)<br>* column 2, lines 53 - 62 * * column 5, line 62 - column 6, line<br>11 *<br>– – – – – | 5,24,26,<br>27 | C 02 F<br>B 01 D |

The present search report has been drawn up for all claims

| Place of search | Date of completion of search | Examiner |
|---|---|---|
| The Hague | 05 April 91 | GONZALEZ ARIAS M.L. |